# EUROPÄISCHE PATENTSCHRIFT

(11) **EP 0 548 515 B1**
(45) Veröffentlichungstag und Bekanntmachung des Hinweises auf die Patenterteilung: **19.04.1995**
(21) Anmeldenummer: 92118922.1
(22) Anmeldetag: 05.11.1992
(51) Int. Cl.: B23D 51/02, B23D 49/16

(54) **Lagereinrichtung für den Stössel einer Sägemaschine**
Bearing assembly for the saw blade holder of sawing machine
Agencement de support pour le poussoir d'une lame de scie dans une machine à scier

(30) Priorität: 28.11.1991 DE 4139130
(43) Veröffentlichungstag der Anmeldung: 30.06.1993
(73) Patentinhaber: ATLAS COPCO ELEKTROWERKZEUGE GmbH, D-71364 Winnenden (DE)
(72) Erfinder: Held, Hans, W-7151 Allmersbach im Tal (DE); Hörner, Gerhard, W-7518 Bretten (DE); Langhoff, Boris, W-7150 Backnang (DE); Marek, Gerhard, W-7157 Murrhardt (DE); Piater, Herbert, W-7157 Murrhardt (DE)
(74) Vertreter: Gaiser, Hartmut, Dipl.-Ing.

(56) Entgegenhaltungen:
- DE-A- 3 203 733
- DE-A- 3 222 120
- DE-U- 8 633 351
- FR-A- 587 291
- US-A- 3 269 197

## Beschreibung

Die Erfindung betrifft eine Lagereinrichtung für den Stößel im Gehäuse einer handgeführten Sägemaschine, insbesondere Stichsägemaschine, mit einer am Stößel befestigten, motorisch antreibbaren Kulisse gemäß Oberbegriff von Patentanspruch 1.

In DE-U 86 33 351.8 ist eine Stichsäge beschrieben. Am Stößel, an dem das Sägeblatt festlegbar ist, ist eine Kulisse befestigt, über die dem Stößel der Sägehub aufgeprägt wird. Oberhalb und unterhalb der Kulisse ist der Stößel an Führungskörpern gelagert. Diese Lagereinrichtung für den Stößel besteht aus Einzelteilen, die jeweils für sich in dem Gehäuse der Maschine angeordnet werden müssen.

Es wurde auch eine Lagereinrichtung vorgeschlagen, die als einheitliche Baugruppe in das Gehäuse einzusetzen ist. Dabei haben sich jedoch verschiedene Nachteile ergeben, die beispielsweise darin bestehen, daß eine Härtung der Baugruppe zur Verbesserung der Gleiteigenschaften der Kulisse zu Maßveränderungen führen kann und als Führungskörper verwendete Teile aus gesintertem Metall wegen ihrer geometrisch aufwendigen Gestaltung teuer sind.

Aufgabe der Erfindung ist es, eine Lagereinrichtung der eingangs genannten Art vorzuschlagen, die als Baueinheit in das Gehäuse einsetzbar ist und die aus konstruktiv einfachen Funktionsteilen auf einfache Weise zusammengesetzt ist, deren Materialien und Formen an die von ihnen geforderten Eigenschaften, wie Verschleißfestigkeit und Gleitfähigkeit anpassbar sind.

Erfindungsgemäß ist obige Aufgabe bei einer Lagereinrichtung der eingangs genannten Art durch die Merkmale gemäß Patentanspruch 1 gelöst.

Der Grundkörper ist in dem Gehäuse lagerbar. Handelt es sich um eine Pendel-Stichsäge, dann ist er pendelbar in dem Gehäuse anzuordnen. Der Grundkörper ist Träger für die Führungsplatte und die Führungshülsen. Der Grundkörper selbst braucht keine besonders vergüteten Oberflächen aufzuweisen. Er kann somit aus einem einfachen Blech-Formteil bestehen: Die Führungsplatte besteht aus einem verschleißfesten und gleitfähigen Werkstoff, beispielsweise Federbandstahl, um für die Kulisse geeignete Gleitflächen zu bilden. Die Führungshülse bzw. die Führungshülsen für den Stößel bestehen ebenfalls aus einem verschleißfesten und gleitfähigen Werkstoff, beispielsweise einem Sinterwerkstoff.

Günstig ist dabei, daß in der so gebildeten Baueinheit die einzelnen Bauteile an die jeweils gewünschten Eigenschaften angepaßt sind, ohne daß solche Eigenschaften auch die anderen Bauteile aufweisen müssen. Insgesamt ist dadurch eine günstig herstellbare und in die Gebrauchseigenschaften hochwertige Lagereinrichtung geschaffen, die außerdem in das Gehäuse einfach einsetzbar ist.

Besonders günstig ist auch, daß die beidseitig des Stößels liegende, Gleitflächen bildende Führungsplatte ein einstückiges Bauteil ist, das darüber hinaus noch wenigstens eine der Führungshülsen am Grundkörper hält.

Dadurch, daß die Führungsplatte ebene Gleitflächen für die Kulisse bildet, ist erreicht, daß die Kulisse weitgehend ohne Verkanten an den Gleitflächen ihre Führung findet.

In bevorzugter Ausgestaltung der Erfindung ist die Führungsplatte über die Länge ihrer Gleitflächen an dem Grundkörper abgestützt. In Weiterbildung der Erfindung kann diese Abstützung über Verstellelemente erfolgen. Es ist dann möglich, die Führung der Kulisse an den Gleitflächen hinsichtlich des Spiels an die jeweiligen Erfordernisse anzupassen.

In bevorzugter Ausgestaltung der Erfindung ist die bzw. sind die Führungshülse bzw. die Führungshülsen außenseitig kalottenförmig gestaltet und in kalottenförmigen Aufnahmen des Grundkörpers mit Spiel gehalten. Dadurch passen sich die Führungshülsen ohne weiteres an die jeweilige Lage des Stößels an, ohne daß besondere Justierarbeiten nötig sind oder es zu einem Verklemmen des Stößels in den Führungshülsen kommen kann.

Der Grundkörper läßt sich als Blechformteil einfach herstellen, das ohne weiteres so gestaltbar ist, daß es die Aufnahmen für die Führungshülse bzw. die Führungshülsen bildet und Drehlageransätze für eine pendelnde Anordnung im Gehäuse aufweist sowie außerdem mit der Führungsplatte leicht verbindbar ist. Ein solches Blechformteil ist in der gewünschten Form leicht herstellbar, da es keiner Wärmebehandlung zum Zwecke einer Härtung, die zu einem Verziehen führen könnte, unterworfen werden muß.

Der Grundkörper kann auch aus einem Druckgußteil hergestellt sein. Für den Grundkörper, die Führungsplatte und die Führungshülsen sind auch andere Werkstoffe verwendbar. Beispielsweise ist es möglich, den Grundkörper und/oder die Führungsplatte und/oder die Führungshülse jeweils aus einem Kunststoff herzustellen. Es ist auch möglich, die die gewünschten unterschiedlichen Eigenschaften gewährleistenden Kunststoffe aneinander anzuspritzen oder anzugießen.

Weitere vorteilhafte Ausgestaltungen der Erfindung ergeben sich aus den Unteransprüchen und der folgenden Beschreibung eines Ausführungsbeispiels. In der Zeichnung zeigen:

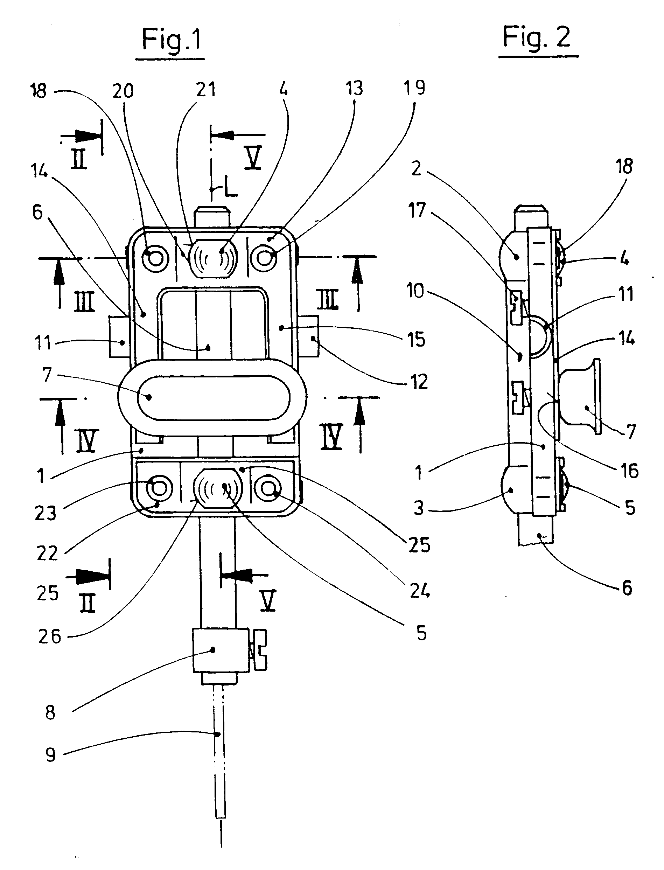

Figur 1 eine Lagereinrichtung mit einem Stößel zur Montage im Gehäuse einer handgeführten Stichsäge,
Figur 2 eine Ansicht längs der Linie II-II nach Figur 1,
Figur 3 einen Schnitt längs der Linie III-III nach Figur 1,
Figur 4 einen Schnitt längs der Linie IV-IV nach Figur 1 und
Figur 5 einen Schnitt längs der Linie V-V nach Figur 1, wobei Figur 5 im Maßstab der Figuren 1 und 2 liegt, wogegen die Figuren 3 und 4 demgegenüber vergrößert sind.

Die Lagereinrichtung weist einen als Blechformteil hergestellten Grundkörper(1) auf. An diesem sind zwei kalottenförmige Pfannen(2,3) ausgebildet. In die Pfannen(2,3) sind Führungshülsen(4,5) aus einem Sintermetall eingelegt. Die Führungshülsen(4,5) sind außenseitig entsprechend den Pfannen(2,3) kalottenförmig, so daß sich die Führungshülsen(4,5) in den Pfannen(2,3) bewegen können.

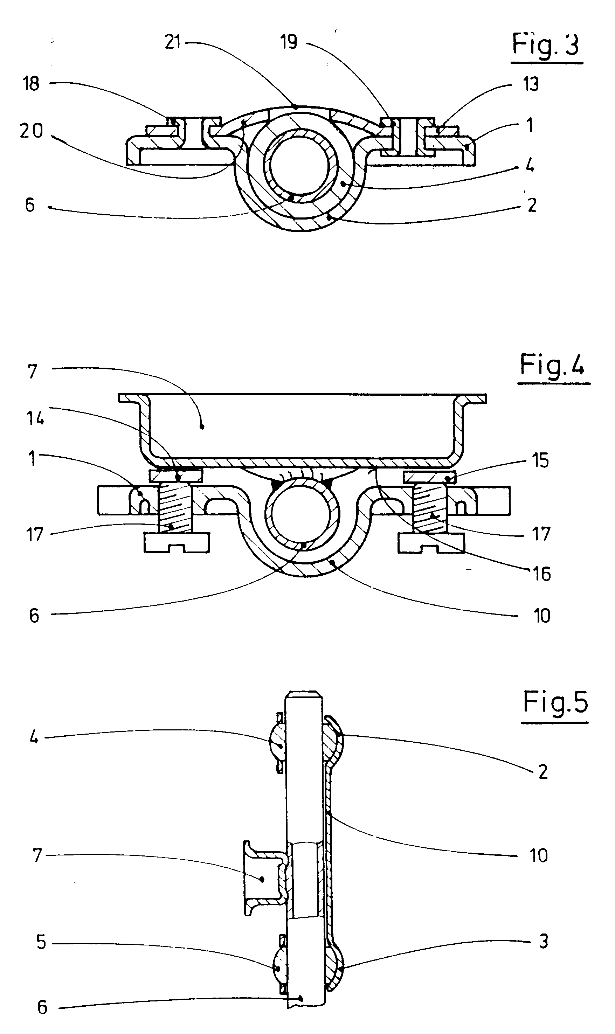

Durch die Führungshülsen(4,5) ist ein rohrförmiger Stößel(6) in Längsachsrichtung(L) verschieblich gesteckt. An den Stößel(6) ist zwischen den Führungshülsen(4,5) eine von einem Blechformteil gebildete Kulisse(7) angeschweißt (vgl. Figur 4). An dem Stößel(6) ist mittels eines Klemmstücks(8) ein Stichsägeblatt(9) festlegbar.

Zwischen den Pfannen(2,3) ist am Grundkörper(1) ein Kanal(10) ausgeformt, in dem sich der Stößel (6) erstreckt.

An dem Grundkörper(1) sind Pendellageransätze(11,12) ausgebildet, die der Lagerung des Grundkörpers(1) in dem nicht näher dargestellten Gehäuse der Stichsägemaschine dienen. Handelt es sich um eine Pendel-Stichsäge, dann ist der Grundkörper(1) im Gehäuse pendelnd an den Pendellageransätzen(11,12) gelagert. Handelt es sich um eine Stichsäge ohne Pendelfunktion, dann ist der Grundkörper(1) im betreffenden Gehäuse zusätzlich abgestützt, so daß er nicht pendelbar ist.

An dem Grundkörper(1) ist eine Führungsplatte(13) befestigt. Diese besteht aus einem gegebenenfalls gehärteten Federbandstahl. Die Führungsplatte(13) bildet zwei ebene Gleitflächen(14,15), die sich beidseitig neben dem Stößel(6) parallel zu diesem erstrecken. Die Gleitflächen(14,15) sind von dem Grundkörper(1) abgestützt. An den Gleitflächen(14,15) liegt die Kulisse (7) mit ihrer Unterseite(16) mit mehr oder weniger Spiel an. Die Kulisse(7) findet im Betrieb - bei ihrer Hubbewegung in Richtung der Längsachse(L) - ihre Anlage an den Gleitflächen(14,15).

Beim Ausführungsbeispiel sind als Verstellelemente für die Gleitflächen(14,15) in den Grundkörper(1) geschraubte Schrauben(17) gezeigt, an denen sich die Gleitflächen (14,15) abstützen. Durch die Schrauben(17) ist die Abstützung und damit das beiderseitige Spiel der Kulisse(7) gegenüber den Gleitflächen(14,15) an den jeweiligen Einsatzfall anpaßbar. Durch die Einstellung der Schrauben(17) läßt sich auch eine Ausrichtung der Kulisse(7) erreichen. In vereinfachter Ausführung ist die Führungsplatte(13) im Bereich ihrer Gleitflächen(14,15) direkt an dem Grundkörper(1) abstützt.

Die Führungsplatte(13) ist ein U-förmiges Bauteil. Sie ist neben den Gleitflächen(14,15) mittels Nieten(18,19) an dem Grundkörper(1) befestigt. Die Nieten(18,19) können direkt an dem Grundkörper(1) ausgebildet sein (vgl. Figur 3 links). Die Nieten(18,19) können jedoch auch separate Bauteile sein (vgl. Figur 3 rechts). Anstelle der Nieten kann auch eine Schraubverbindung vorgesehen sein.

Zwischen den Nieten(18,19) ist an der Führungsplatte(13) eine Ausbuchtung(20) ausgebildet, die eine Öffnung(21) aufweist. Die Ausbuchtung(20) und die Form der Öffnung (21) ist der Kalottenform der Führungshülse(4) so angepaßt, daß die Führungshülse(4) in der Pfanne(2) mit einem geringfügigen Spiel gehalten ist, so daß sich die Führungshülse(4) dem Stößel(6) in ihrer Lage anpassen kann.

Die Führungshülse(5) ist in der Pfanne(3) mittels eines flächigen Teils(22) ebenso wie die Führungshülse(4) gehalten. Das flächige Teil(22) ist wie die Führungsplatte(13) mittels Nieten(23,24) am Grundkörper (1) gehalten und weist eine Ausbuchtung(25) mit Öffnung (26) auf. Beide Führungshülsen(4,5) sind gleich gestaltet.

Das flächige Teil(22) und die Führungsplatte(13) können gemeinsam einstückig ausgebildet sein. In diesem Fall sind die Schrauben (17) zur Verstellung der Gleitflächen(14,15) nicht vorgesehen.

Die beschriebene Einrichtung bildet eine Baueinheit, die sich in dem Gehäuse der Sägemaschine mittels ihres Grundkörpers(1) leicht montieren läßt. Die Einrichtung bildet einerseits mit ihren hinsichtlich der Verschleißfestigkeit und der Gleitfähigkeit an die Kulisse (7) angepaßten Eigenschaften der Führungsplatte (13) und andererseits mit ihren an den Stößel(6) angepaßten Eigenschaften der Führungshülsen(4,5) eine einfache Baueinheit, die auch den Stößel(6) mit seiner Kulisse(7) umfaßt. Bei der Montage werden also zunächst die Führungshülsen(4,5) beiderseits der Kulisse(7) auf den Stößel(6) aufgeschoben. Anschließend werden die Führungshülsen(4,5) in die Pfannen(2,3) des Grundkörpers (1) gelegt. Danach werden dann die Führungshülsen(4,5) mittels der Führungsplatte(13) bzw. des flächigen Teils(22) durch deren Festlegung am Grundkörper(1) an diesem gehalten. Die so vorgefertigte Baugruppe kann dann einfach in das Gehäuse der Sägemaschine eingesetzt werden.

## Patentansprüche

1. Lagereinrichtung für den Stößel im Gehäuse einer handgeführten Sägemaschine, insbesondere Stichsägemaschine, mit einer am Stößel befestigten, motorisch antreibbaren Kulisse, mit einem im Gehäuse anzuordnenden Grundkörper(1) an dem wenigstens eine Führungshülse(4,5) für den Stößel(6) angeordnet ist dadurch gekennzeichnet, daß an dem Grundkörper eine Führungsplatte(13) befestigt ist, die beidseitig des Stößels(6) ebene Gleitflächen(14,15) für die Kulisse(7) bildet, und daß wenigstens eine Führungshülse am Grundkörper(1) mittels der Führungsplatte(13) gehalten ist.

2. Lagereinrichtung nach Anspruch 1, dadurch gekennzeichnet, daß die Führungsplatte(13) über die Länge ihrer Gleitflächen(14,15) an dem Grundkörper(1) abgestützt ist.

3. Lagereinrichtung nach Anspruch 2, dadurch gekennzeichnet, daß zur Abstützung der Gleitflächen(14,15) der Führungsplatte(13) an dem Grundkörper(1) Verstellelemente(17) vorgesehen sind.

4. Lagereinrichtung nach Anspruch 3, dadurch gekennzeichnet, daß die Verstellelemente Schrauben(17) sind.

5. Lagereinrichtung nach einem der vorhergehenden Ansprüche, dadurch gekennzeichnet, daß die Führungsplatte(13) aus Federbandstahl besteht.

6. Lagereinrichtung nach einem der vorhergehenden Ansprüche, dadurch gekennzeichnet, daß die Führungsplatte(13) neben den Gleitflächen(14,15) mit dem Grundkörper(1) fest verbunden ist.

7. Lagereinrichtung nach Anspruch 6, dadurch gekennzeichnet, daß die Führungsplatte(13) neben den Gleitflächen(14,15) mit dem Grundkörper(1) vernietet oder verschraubt ist.

8. Lagereinrichtung nach einem der vorhergehenden Ansprüche, dadurch gekennzeichnet, daß die Führungshülse(4) bzw. die Führungshülsen(4,5) außenseitig kalottenförmig gestaltet sind und in kalottenförmigen Pfannen(2,3) des Grundkörpers(1) mit Spiel gehalten sind.

9. Lagereinrichtung nach einem der vorhergehenden Ansprüche, dadurch gekennzeichnet, daß die Führungshülsen (4,5) aus einem gesinterten metallischen oder keramischen Werkstoff bestehen.

10. Lagereinrichtung nach einem der vorhergehenden Ansprüche, dadurch gekennzeichnet, daß der Grundkörper(1) ein Blechformteil ist.

11. Lagereinrichtung nach einem der vorhergehenden Ansprüche, dadurch gekennzeichnet, daß der Grundkörper(1) Pendellageransätze(11,12) für seine pendelnde Anordnung im Gehäuse aufweist.

12. Lagereinrichtung nach einem der vorhergehenden Ansprüche 1-8, 10,11, dadurch gekennzeichnet, daß der Grundkörper(1) und/oder die Führungsplatte(13) und/oder die Führungshülsen(4,5) jeweils aus einem Kunststoff bestehen.

13. Lagereinrichtung nach Anspruch 12, dadurch gekennzeichnet, daß die Kunststoffe aneinander angespritzt oder angegossen sind.

## Claims

1. Bearing assembly for the ram in the housing of a hand-held mechanical saw, in particular sabre saw, having a motor-driven slide fixed to the ram and having a base body (1) to be disposed in the housing, on which at least one guide sleeve (4, 5) for the ram (6) is disposed, characterised in that a guide plate (13) is fixed to the base body and forms plane slide faces (14, 15) for the slide (7) on either side of the ram (6), and in that at least one guide sleeve is held on the base body (1) by means of the guide plate (13).

2. Bearing assembly according to claim 1, characterised in that the guide plate (13) is supported on the base body (1) over the entire length of its slide faces (14, 15).

3. Bearing assembly according to claim 2, characterised in that adjusting elements (17) for supporting the slide faces (14, 15) of the guide plate (13) are provided on the base body (1).

4. Bearing assembly according to claim 3, characterised in that the adjusting elements are screws (17).

5. Bearing assembly according to one of the preceding claims, characterised in that the guide plate (13) consists of spring band steel.

6. Bearing assembly according to one of the preceding claims, characterised in that the guide plate (13) is permanently connected to the base body (1) next to the slide faces (14, 15).

7. Bearing assembly according to claim 6, characterised in that the guide plate (13) is riveted or screwed to the base body (1) next to the slide faces (14, 15).

8. Bearing assembly according to one of the preceding claims, characterised in that the guide sleeve (4) or the guide sleeves (4, 5) are dome-shaped on the exterior and are held with clearance in dome-shaped hollows (2, 3) in the base body (1).

9. Bearing assembly according to one of the preceding claims, characterised in that the guide sleeves (4, 5) consist of a sintered metal or ceramic material.

10. Bearing assembly according to one of the preceding claims, characterised in that the base body (1) is a pressed sheet-metal part.

11. Bearing assembly according to one of the preceding claims, characterised in that the base body (1) has tumbler bearing lugs (11, 12) for mounting said base body in a swiveling manner in the housing.

12. Bearing assembly according to one of the preceding claims 1-8, 10, 11, characterised in that the base body (1) and/or the guide plate (13) and/or the guide sleeves (4, 5) each consist of a plastics material.

13. Bearing assembly according to claim 12, characterised in that the plastics materials are injection moulded or cast on to one another.

## Revendications

1. Dispositif à paliers pour le poussoir dans le carter d'une scie manuelle en particulier d'une scie sauteuse avec une coulisse motorisée et fixée au poussoir, avec un corps de base (1) à disposer dans le carter, corps contre lequel est disposée au moins une douille de guidage (4, 5) pour le poussoir (6), caractérisé en ce que contre le corps de base est fixée une plaque de guidage (13) qui forme des deux côtes du poussoir (6) des surfaces de glissement (14, 15) pour la coulisse (7), et en ce qu'au moins une douille de guidage est maintenue contre le corps de base (1) au moyen de la plaque de guidage (13).

2. Dispositif à paliers selon la revendication 1, caractérisé en ce que la plaque de guidage (13) est soutenue sur toute la longueur de ses surfaces de glissement (14, 15) contre le corps de base (1).

3. Dispositif à paliers selon la revendication 2, caractérisé en ce que pour l'appui des surfaces de glissement (14, 15) de la plaque de guidage (13) contre le corps de base (1), il est prévu des éléments de réglage (17).

4. Dispositif à paliers selon la revendication 3, caractérisé en ce que les éléments de réglage sont des vis (17).

5. Dispositif à paliers selon l'une des revendications précédentes, caractérisé en ce que la plaque de guidage (13) se compose d'acier feuillard pour ressorts.

6. Dispositif à paliers selon l'une des revendications précédentes, caractérisé en ce que la plaque de guidage (13) est reliée au corps de base (1) à côté des surfaces de glissement (14, 15).

7. Dispositif à paliers selon la revendication 6, caractérisé en ce que la plaque de guidage (13) est rivetée ou vissée au corps de base (1) à côté des surfaces de glissement (14, 15).

8. Dispositif à paliers selon l'une des revendications précédentes, caractérisé en ce que la douille de guidage (4) respectivement les douilles de guidage (4, 5) forment, sur la face externe, une calotte et sont maintenues avec du jeu dans des poches (2, 3) en forme de calotte du corps de base (1).

9. Dispositif à paliers selon l'une des revendications précédentes, caractérisé en ce que les douilles de guidage (4, 5) se composent d'un matériau céramique ou métallique fritté.

10. Dispositif à paliers selon l'une des revendications précédentes, caractérisé en ce que le corps de base (1) est une pièce de tôle moulée.

11. Dispositif à paliers selon l'une des revendications précédentes, caractérisé en ce que le corps de base (1) présente des embases de palier pendulaire (11, 12) pour sa disposition pendulaire dans le carter.

12. Dispositif à paliers selon l'une des revendications précédentes 1-8, 10,11, caractérisé en ce que le corps de base (1) et/ou la plaque de guidage (13) et/ou les douilles de guidage (4, 5) se composent de matière plastique.

13. Dispositif à paliers selon la revendication 12, caractérisé en ce que les matières plastiques sont coulées ou moulées par injection l'une à l'autre.
